# EUROPEAN PATENT APPLICATION

(11) **EP 4 678 510 A1**
(43) Date of publication of application: **14.01.2026**
(21) Application number: 24382754.0
(22) Date of filing: 12.07.2024
(51) Int. Cl.: B62D 3/12, B62D 21/11

(54) **SET OF BUSHINGS FOR FIXING A STEERING GEAR**

(71) Applicant: Cikautxo, S. Coop., 48710 Berriatua (ES)
(72) Inventor: AZPIAZU ECHAVE, Iñaki, 48270 MARKINA - XEMEIN (ES)
(74) Representative: Galbaian S.Coop.

(57) **Abstract**

Set of bushings (100) for fixing a steering gear comprising a first mounting bushing (1), a second mounting bushing (1) and an enveloping bushing (4) of the steering gear, each mounting bushing (1) comprising a main body (2) comprising a cylindrical body (2a), a head (2b) and an elastic coating (3) covering the cylindrical body (2a) and the head (2b), the main body (2) also comprising at least one main protrusion (5) and at least one secondary protrusion (6) extending axially from the free end of the corresponding cylindrical body (2a), wherein in a position of use the mounting bushings (1) are arranged opposite each other on the inside of the enveloping bushing (4) in contact with each other, so that the main protrusion (5) of the first mounting bushing (1) couples with the secondary protrusion (6) of the second mounting bushing (1) and the secondary protrusion (6) of the first mounting bushing (1) couples with the main protrusion (5) of the second mounting bushing (1), so that both mounting bushes (1) are axially fixed and retained against each other.

## Description

### TECHNICAL FIELD

The present invention relates to sets of bushings for mounting and fixing a steering gear to the body of a vehicle, thereby damping vibrations.

### PRIOR ART

The steering gear of a vehicle is responsible for transmitting the forces and movements between the gear or suspension mechanism and the wheels of the vehicle. The steering gears are usually fixed to the body or chassis of the vehicle by means of bushings that allow vibrations from rolling to be damped towards the vehicle chassis.

Steering gears usually comprise two housings, normally spaced apart, configured to receive two bushings which are arranged opposite each other inside the corresponding housing. Each bushing usually comprises a metallic main body covered by an elastic coating that dampens the transmission of vibrations to the vehicle body. Fixing means, usually screws, pass through the bushes for fixing the steering gear.

The bushings are pressed into the corresponding housing of the steering gear with the help of external equipment which presses the two bushings symmetrically at the same time.

In this regard, CN203064023U describes a steering gear comprising two enveloping bushings, each having a corresponding inner housing in which two mounting bushings are housed to enable the steering gear to be attached to the steering system of a vehicle. Each mounting bushing comprises a cylindrical main body and an elastic coating covering said cylindrical main body and forming a widened head at one end. The mounting bushings, in a position of use, are arranged opposite each other inside the respective housing, so that the cylindrical main bodies are housed inside the respective housing, in contact with each other, and the heads formed by the covering of both mounting bushings are arranged outside the respective housing, resting on a corresponding end of the enveloping bushing.

### DISCLOSURE OF THE INVENTION

The object of the invention is to provide a set of bushings, as defined in the claims.

The set of bushings of the invention enables a steering gear to be attached to the steering system of a vehicle, the set of bushings comprising a first mounting bushing, a second mounting bushing and an enveloping bushing of the steering gear. Each mounting bushing comprises a main body comprising a cylindrical body, a head, and an elastic coating covering the cylindrical body and the corresponding head. The mounting bushings, in a position of use, are arranged opposite each other on the inside of the enveloping bushing in contact with each other, so that the cylindrical bodies are housed in an inner housing of the enveloping bushing, and the heads are arranged outside the inner housing supported by a corresponding end of the enveloping bushing.

The main body of each mounting bushing comprises at least one main protrusion extending axially from the free end of the corresponding cylindrical body, said main protrusion being a segment of a first imaginary ring, and at least one secondary protrusion also extending axially from the free end of the corresponding cylindrical body, said secondary protrusion being a segment of a second imaginary ring. The cylindrical body, the first imaginary ring and the second imaginary ring of each mounting bushing are coaxial.

The main protrusion and the secondary protrusion are arranged in such a way that, in the position of use, the main protrusion of the first mounting bushing couples with the secondary protrusion of the second mounting bushing, and the secondary protrusion of the first mounting bushing couples with the main protrusion of the second mounting bushing, so that both mounting bushings are fixed and retained axially to each other.

With the set of bushings of the invention, the mounting bushings are axially retained in the position of use, and this position of use is maintained over time, thus enabling the steering gear to be correctly mounted in the corresponding assembly station. The position of use is normally achieved in a pre-assembly operation with the aid of external equipment that presses the two mounting bushings symmetrically together at the same time. However, the mounting of the steering gear to the vehicle chassis is usually done at another mounting station, which may be several kilometres away. It is important that in that interval the mounting bushings do not lose their position of use to avoid problems in the final assembly of the steering gear, so that the set of bushings of the invention avoids assembly problems in the vehicle assembly line, as the mounting bushings retain the (axial) position of use.

These and other advantages and features of the invention will become evident in view of the drawings and the detailed disclosure of the invention.

### DESCRIPTION OF THE DRAWINGS

Figure 1 shows a perspective view of part of a vehicle chassis and a steering gear comprising two sets of bushings according to an embodiment of the invention.
Figure 2A shows a perspective view of the set of bushings according to an embodiment of the invention, but without the enveloping bushing.
Figure 2B is a detail of the set of bushings of figure 2A.
Figure 2C is a front view of one of the mounting bushings of the set of bushings of figure 2A, viewed from the primary and secondary protrusions.
Figure 3 is a sectional view of the set of bushings according to an embodiment of the invention, the two mounting bushings being in a position of use housed in an inner housing of the enveloping bushing.
Figure 4 shows a sectional view of an embodiment of the main body of one of the mounting bushings.

### DETAILED DISCLOSURE OF THE INVENTION

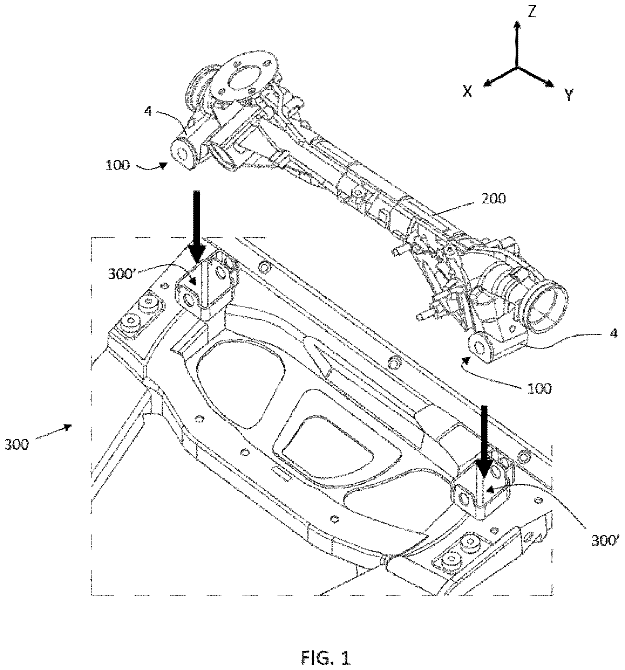

Figure 1 shows a perspective view of a part of a vehicle chassis 300 comprising housings 300' adapted for fixing a steering gear 200 as shown in the non-limiting example of figure 1. The steering gear 200 is adapted for mounting on said chassis 300 in the direction of the arrows, as will be detailed in the description.

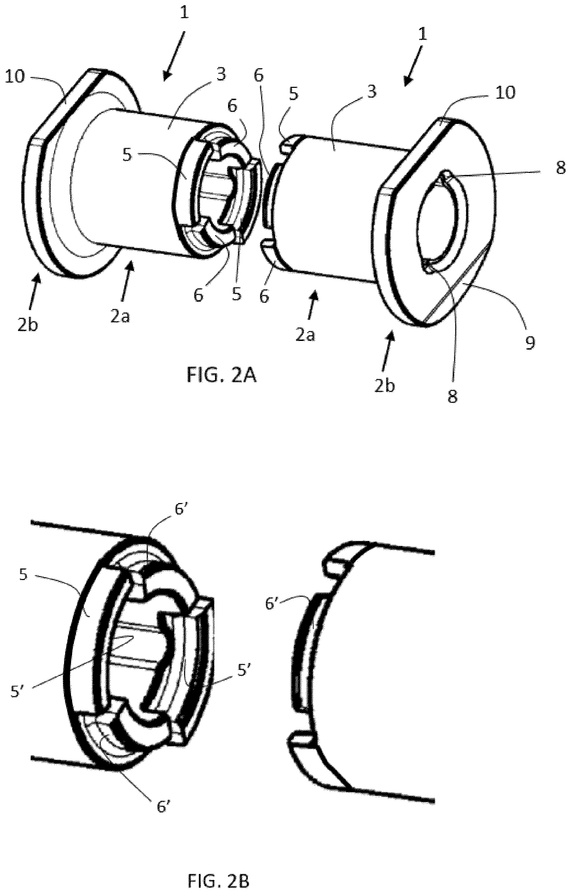

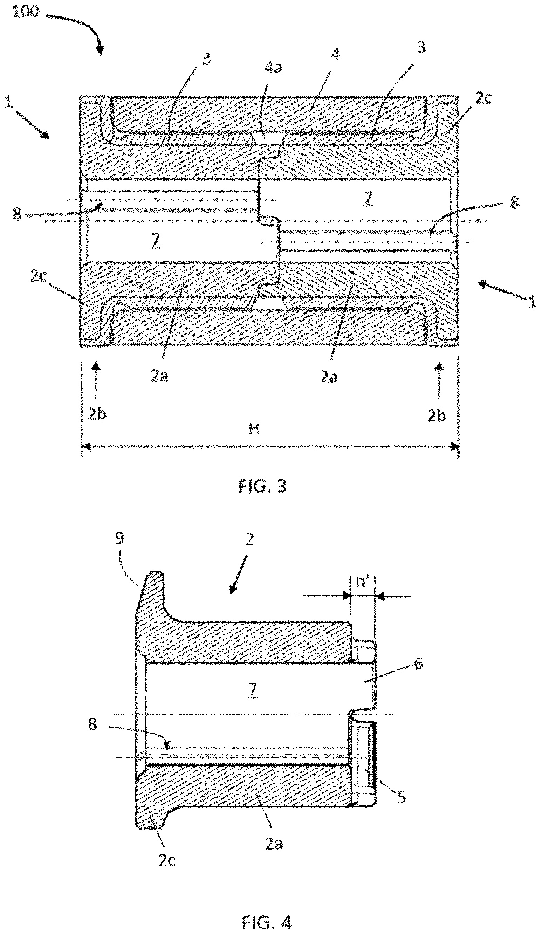

Figure 2A shows an embodiment of the set of bushings according to the invention but without the enveloping bushing 4 for a better understanding of the invention. The set of bushings 100 of the invention makes it possible to fix a first element, for example a steering gear 200, to a second element, for example the chassis 300 of a vehicle, damping the transmission of vibrations from the first element to the second element. As shown in Figure 3, the set of bushings 100 comprises a first mounting bushing 1, a second mounting bushing 1 and an enveloping bushing 4 of the steering gear 200 (or of the first element). Each mounting bushing 1 comprises a main body 2 comprising a cylindrical body 2a, and the mounting bushing 1 further comprising a head 2b and an elastic coating 3 covering the cylindrical body 2a and the corresponding head 2b. In the context of the invention, the head 2b extends radially beyond the outer diameter of the cylindrical body 2a.

In a position of use, the mounting bushings 1 are arranged opposite each other on the inside of the enveloping bushing 4 in contact with each other, so that the cylindrical bodies 2a are located in an inner housing 4a of the enveloping bushing 4, and the heads 2b are located outside the inner housing 4a, resting on a corresponding end of the enveloping bushing 4, the elastic coating 3 preferably being in contact with the enveloping bushing 4.

The main body 2 of each mounting bushing 1 comprises at least one main protrusion 5 extending axially from the free end of the corresponding cylindrical body 2a, said main protrusion 5 being a segment of a first imaginary ring, and at least one secondary protrusion 6 also extending axially from the free end of the corresponding cylindrical body 2a, said secondary protrusion 6 being a segment of a second imaginary ring. The cylindrical body 2a, the first imaginary ring and the second imaginary ring are coaxial, the first imaginary ring being larger than the second imaginary ring.

The main protrusion 5 and the secondary protrusion 6 of each mounting bushing 1 are arranged such that, in the position of use, the main protrusion 5 of the first mounting bushing 1 couples with the secondary protrusion 6 of the second mounting bushing 1 and the secondary protrusion 6 of the first mounting bushing 1 couples with the main protrusion 5 of the second mounting bushing 1, as shown in Figure 3, so that both mounting bushings 1 are axially fixed and retained axially to each other, i.e. they are press-fitted together.

With the set of bushings 100 of the invention the mounting bushings 1 are axially retained in the position of use, maintaining said position of use over time, thus enabling the correct assembly of the steering gear 200 on the vehicle chassis 300 on the corresponding assembly line. In the position of use the axial relative distance H between the heads 2b of both mounting bushings 1, as shown in figure 3, is that necessary to allow the correct assembly of the steering gear 200 on the vehicle, i.e., being the set of bushings 100 in the position of use, the heads 2b of the mounting bushings 1 and the enveloping bushing 4 must be able to be housed in a respective housing 300' of the vehicle chassis 300. The position of use is normally obtained in a pre-assembly operation with the aid of external equipment that symmetrically presses the two mounting bushings 1 at the same time against each other, so that the elastic coating 3 of the head 2b can be axially compressed against the enveloping bushing 4. However, the assembly of the steering gear 200 (or the element comprising the enveloping bushing 4 with the mounting bushings 1 inside it) is carried out at another assembly station, which may be several kilometres away. It is therefore important that, in that interval or journey, the mounting bushings 1 do not lose the axial position of use in order to avoid problems in the assembly line of the steering gear 200. In other words, it is necessary to maintain over time (and especially during the journey to the final assembly operation of the steering gear 200 on the chassis 300) the relative axial distance H obtained in the initial pre-assembly operation, which might not vary in order to avoid problems in the final assembly line. Therefore, the set of bushings 100 of the invention prevents the relative axial distance H obtained in the pre-assembly operation from varying, thus helping to avoid subsequent assembly problems, even if the steering gears 200 have to be transported with the set of bushings 100 to the final assembly line.

One of the reasons why the position of use (the relative axial distance H) may vary is due to the spring effect or elastic return of the elastic coating 3, commonly known as springback, where the two mounting bushings 1 tend to separate because the elastic coating 3 tends to recover its original state when there is no external force pressing on the two mounting bushings 1, increasing the relative axial distance H and making the final mounting of the steering gear 200 in the housings 300' of the chassis 300 impossible. Therefore, the set of bushings 100 of the invention prevents springback in a simple, safe and effective manner.

In a non-limiting example of the invention, the enveloping bushing 4 forms part of the steering gear 200, as shown in Figure 1. However, as already discussed above, the set of bushings 100 could be used for fixing any other element than the steering gear 200. In this case, the enveloping bushing 4 could be part of said element.

In the preferred embodiment of the invention, the mounting bushings 1 are the same. In this way, it is not necessary to duplicate the tools, moulds and/or manufacturing tools to obtain the mounting bushings 1, thus achieving a significant economic saving.

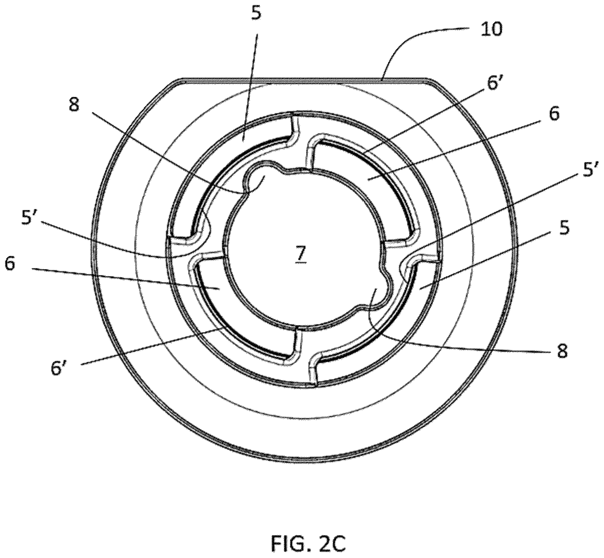

As shown in Figures 2A, 2B and 2C, the main protrusion 5 and the secondary protrusion 6 of each mounting bushing 1 are arranged in different radial positions such that, in the position of use, an inner wall 5' of the main protrusion 5 of one mounting bushing 1 cooperates with an outer wall 6' of the secondary protrusion 6 of the other mounting bushing 1, as shown in Figure 3, the two mounting bushings 1 being axially retained as they are press-fitted together.

In this respect, the draft angle of the inner wall 5' of the main protrusion 5 of the mounting bushing 1 and the outer wall 6' of the secondary protrusion 6 of the other mounting bushing 1 is less than 14°, being preferably in the range between 2° and 6°. This draft angle favours on the one hand to be able to manufacture the main protrusion 5 and the secondary protrusion 6 with suitable manufacturing technologies requiring a demoulding angle, and on the other hand to ensure a strong interference between the inner wall 5' of the main protrusion 5 of the mounting bushing 1 and the outer wall 6' of the secondary protrusion 6 of the other mounting bushing 1 to ensure that both mounting bushings 1 are retained (by pressure) and do not easily become disengaged. Therefore, in the context of the invention, the draft angle can in this case also refer to the demoulding angle.

In the preferred embodiment of the invention the main body 2 is obtained by sintering, although other manufacturing methods could be used, such as stamping, injection moulding, green sand moulding, etc., and even for the manufacture of short series it could be manufactured by machining. Also, the manufacturing tolerance of the main protrusions 5 and secondary protrusions 6 of both mounting bushings 1 is in the range between ± 0.015 and ± 0.075 mm, preferably ± 0.025 mm. These tolerances help to achieve the appropriate and necessary interference between the inner wall 5' of the main protrusion 5 of the corresponding mounting bushing 1 and the outer wall 6' of the secondary protrusion 6 of the other mounting bushing 1 so that both mounting bushings 1 can be coupled and held together by pressure, while ensuring repeatability in the manufacturing process. With this range of tolerances it is therefore ensured, whatever the actual draft angle of the inner wall 5' of the main protrusion 5 and the outer wall 6' of the secondary protrusion 6 of both cooperating mounting bushes 1, on the one hand that both mounting bushes 1 can couple with each other without having to exert excessive force and on the other hand, it is ensured that there is a predetermined dismounting effort to prevent the two mounting bushes 1 from being easily disengaged, e.g. due to springback. In other words, due to the interference fit between the two mounting bushings 1, it will be necessary to overcome this dismounting effort in order to be able to disengage both mounting bushings 1. Thanks to the described demoulding angle and manufacturing tolerances, the dismounting effort required to uncouple the mounting bushes 1 of the invention is greater than the separation reaction of the mounting bushes 1 due to the springback effect, and therefore, the two mounting bushes 1, once coupled, remain in the axial position of use even if the external force, exerted by the external equipment to couple the two mounting bushes 1, disappears.

In the preferred embodiment of the invention the axial height h' of the main protrusion 5 and the secondary protrusion 6 of each mounting bushing 1 is the same, this height h' being in the range between 1 and 6 mm, preferably 3.

As already discussed, the relative axial distance H between the heads 2b of both mounting bushings 1 required to be able to mount the steering gear 200 on the vehicle chassis 300 on the assembly line defines the position of use to be obtained in the pre-assembly operation, being in said position of use, shown in figure 3, the inner wall 5' of the main protrusion 5 of one mounting bushing 1 is in contact with the outer wall 6' of the secondary protrusion 6 of the other mounting bushing 1, preferably so that the main protrusion 5 and the secondary protrusion 6 of one mounting bushing 1 are in contact with the cylindrical body 2a of the other mounting bushing 1, as shown in figure 3. To ensure the steering gear 200 is mounted, the relative axial distance H must be less than or equal to a threshold value, normally defined by the vehicle manufacturer, but may not be greater.

In the preferred embodiment of the invention the thickness of the main protrusion 5 and that of the secondary protrusion 6 of the same mounting bushing 1 is different, the thickness of the secondary protrusion 6 being preferably greater than that of the main protrusion 5, as shown in the non-limiting example of figure 2C. However, in a variant of the invention, not shown in the drawings, the thicknesses of the main protrusion 5 and the secondary protrusion 6 are the same.

In the preferred embodiment of the invention the cylindrical body 2a, the main protrusion 5 and the secondary protrusion 6 of each mounting bushing 1 are made of a rigid material, being preferably metallic, and most preferably of steel, the cylindrical body 2a, the main protrusion 5 and the secondary protrusion 6 of each mounting bushing 1 being able to form a single piece.

Likewise, in the preferred embodiment of the invention the elastic coating 3 is rubber, preferably natural rubber or EPDM, the elastic coating 3 being over moulded onto the main body 2.

In the preferred embodiment of the invention the main body 2 further comprises a base 2c attached to the cylindrical body 2a, which preferably, as shown in figure 4, form a single piece, so that said base 2c is also of a rigid material. The base 2c forms part of the head 2b, and therefore, said base 2c also extends radially beyond the outer diameter of the cylindrical body 2a.

In a variant of the invention (not shown in the drawings), the main body 2 does not comprise the base 2c extending radially beyond the outer diameter of the cylindrical body 2a, and therefore, the head 2b may be formed exclusively by the elastic coating 3, or by an extended section of the cylindrical body 2a extending to the end of the head 2b without increasing its outer diameter, and by the elastic coating 3 surrounding said extended section.

In the non-limiting example of the figures, each mounting bushing 1 comprises two diametrically opposed main protrusions 5 and two diametrically opposed secondary protrusions 6, the two secondary protrusions 6 being arranged at 90° to the two main protrusions 5, as shown for example in figure 2A, i.e. one main protrusion 5 is angularly arranged between two secondary protrusions 6, and vice versa. Thus, in the position of use the assembly formed by the main protrusions 5 and the secondary protrusions 6 of both mounting bushings 1 form a ring, preferably a segmented ring, i.e. a sub-assembly formed by a main protrusion 5 or a secondary protrusion 6 of one mounting bushing 1 and the complementary secondary protrusion 6 or main protrusion 5 of the other mounting bushing 1 is arranged at a radial distance from another sub-assembly, forming in this case four sub-assemblies, hence the definition of a segmented ring. The gap between these sub-assemblies enables the two mounting bushings 1 to be separated if necessary, e.g. by inserting a tool into the gap (e.g. the tip of a screwdriver).

As shown in Figure 3, the main body 2 (whether or not having the base 2c) and the head 2b of each mounting bushing 1 comprises a through hole 7 configured to allow the passage of fixing means, for example a screw, allowing the steering gear 200 to be fixed to the body or chassis 300 of the vehicle when the mounting bushings 1 are arranged in the position of use inside the enveloping bushing 4. As can be seen in Figure 1, in the position of use each enveloping bushing 4, incorporating the mounting bushings 1, is housed in a corresponding housing 300' of the vehicle chassis 300, and the fastening means pass through both the mounting bushings 1 and the corresponding housing 300'. Each housing 300' is of such a length to allow the corresponding enveloping bushing 4 to be accommodated with the respective mounting bushings 1, but in such a way that there is not much clearance. Therefore, once the mounting bushings 1 are mounted on the enveloping bushing 4 with the aid of the external equipment, wherein the heads 2b can be compressed against the respective enveloping bushing 4, the relative axial distance H between the heads 2b of both mounting bushings 1 cannot increase in order to be accommodated in the respective housing 300'. Thus, thanks to the set of bushings 100 of the invention, the mounting bushings 1 are able to resist the springback effect reaction (once the external equipment stops pressing the two mounting bushings 1 against each other), and the relative axial distance H does not change.

The through hole 7 of each mounting bushing 1 comprises at least one longitudinal notch 8, preferably in the form of a groove, extending from the head 2b to the free end of the cylindrical body 2a, this notch 8 being arranged in the same angular position as a section of the corresponding main protrusion 5, so that in the position of use this notch 8 faces the complementary secondary protrusion 6 of the other mounting bushing 1. This notch 8 also allows the insertion of a tool, for example a screwdriver, to enable the mounting bushings 1 to be disassembled if necessary. In a non-limiting example, after disassembling the fastening means securing the steering gear 200 to the vehicle chassis 300, the tip of a screwdriver could be inserted through the notch 8 of one mounting bushing 1 to provoke taps on the end of the cylindrical body 2a of the other mounting bushing 1, thus enabling the two mounting bushings 1 to be gradually separated. Optionally, the through hole 7 of each mounting bushing 1 comprises two longitudinal notches 8, as shown for example in figure 1, one notch 8 being arranged at the same angular position as a section of a respective main protrusion 5.

In the preferred embodiment of the invention the head 2b of each mounting bushing 1 comprises a chamfer 9, as shown in figure 2, for facilitating the mounting of a rack assembly on the vehicle chassis 300, said rack assembly being formed by the steering gear 200 and the set of bushings 100 of the invention. Optionally, the head 2b of each mounting bushing 1 may also comprise a recessed section 10, which as shown in the non-limiting example of figure 1 is arranged diametrically opposite the chamfer 9, in order to avoid collisions with other elements of the chassis 300 or of the vehicle and thus ensure correct mounting of the rack assembly on the vehicle.

## Claims

1. Set of bushings for fixing a steering gear (200), the set (100) comprising a first mounting bushing (1), a second mounting bushing (1) and an enveloping bushing (4) of the steering gear (200), each mounting bushing (1) comprising a main body (2) comprising a cylindrical body (2a), a head (2b) and an elastic coating (3) covering the cylindrical body (2a) and the corresponding head (2b), the mounting bushings (1) being arranged in a position of use facing each other inside the enveloping bushing (4) in contact with each other, so that the cylindrical bodies (2a) are housed in an inner housing (4a) of the enveloping bushing (4) and the heads (2b) are arranged outside said inner housing (4a) supported on a corresponding end of the enveloping bushing (4), **characterised in that** the main body (2) of each mounting bushing (1) comprises at least one main protrusion (5) extending axially from the free end of the corresponding cylindrical body (2a), said main protrusion (5) being a segment of a first imaginary ring, and at least one secondary protrusion (6) also extending axially from the free end of the corresponding cylindrical body (2a), said secondary protrusion (6) being a segment of a second imaginary ring, the cylindrical body (2a), the first imaginary ring and the second imaginary ring being coaxial, the main protrusion (5) and the secondary protrusion (6) being arranged such that, in the position of use, the main protrusion (5) of the first mounting bushing (1) couples with the secondary protrusion (6) of the second mounting bushing (1) and the secondary protrusion (6) of the first mounting bushing (1) couples with the main protrusion (5) of the second mounting bushing (1), so that both mounting bushings (1) are axially fixed and retained in relation to each other.

2. Set of bushings according to claim 1, wherein the two mounting bushings (1) are the same.

3. Set of bushings according to claim 1 or 2, wherein the main protrusion (5) and the secondary protrusion (6) of each mounting bushing (1) are arranged in different radial positions such that, in the position of use, an inner wall (5') of the main protrusion (5) of one mounting bushing (1) cooperates with an outer wall (6') of the secondary protrusion (6) of the other mounting bushing (1).

4. Set of bushings according to claim 3, wherein the draft angle of the inner wall (5') of the main protrusion (5) of one mounting bushing (1) and the outer wall (6') of the secondary protrusion (6) of the other mounting bushing (1) is less than 14°, preferably being in the range between 2° and 6°.

5. Set of bushings according to any of the preceding claims, wherein the cylindrical body (2a), the main protrusion (5) and the secondary protrusion (6) of each mounting bushing (1) are metallic, preferably steel, wherein said cylindrical body (2a), said main protrusion (5) and said secondary protrusion (6) may form a single piece, and the elastic coating (3) is made of rubber, preferably natural rubber or EPDM.

6. Set of bushings according to any of the preceding claims, wherein the main body (2) comprises a base (2c) attached to the cylindrical body (2a), said base (2c) forming part of the head (2b) and preferably the cylindrical body (2a) and the base (2c) forming a single piece.

7. Set of bushings according to any one of claims 1 to 5, wherein the head (2b) is formed by the coating (3).

8. Set of bushings according to any of the preceding claims, wherein the main body (2) is obtained by sintering.

9. Set of bushings according to any of the preceding claims, wherein the thickness of the secondary protrusion (6) of a mounting bushing (1) is greater than the thickness of the main protrusion (5) of the same mounting bushing (1).

10. Set of bushings according to any of the preceding claims, wherein the axial height (h') of the main protrusion (5) and the secondary protrusion (6) of each main bushing (1) is in the range of 1 to 6 mm.

11. Set of bushings according to any of the preceding claims, wherein each mounting bushing (1) comprises two diametrically opposed main protrusions (5) and two diametrically opposed secondary protrusions (6), the two secondary protrusions (6) being arranged at 90° to the two main protrusions (5).

12. Set of bushings according to claim 11, wherein in the position of use the assembly formed by the main protrusions (5) and the secondary protrusions (6) of both mounting bushings (1) form a segmented ring.

13. Set of bushings according to any of the preceding claims, wherein the manufacturing tolerance of the main protrusions (5) and the secondary protrusions (6) of both mounting bushings (1) is in the range of between! 0.015 and ± 0.075 mm, preferably ± 0.025 mm.

14. Set of bushings according to any of the preceding claims, wherein the main body (2) and the head (2b) of each mounting bushing (1) comprises a through hole (7) configured to allow the passage of fastening means for attaching the steering gear (200) to the body of a vehicle when the mounting bushings (1) are arranged in the position of use, the through hole (7) of each mounting bushing (1) comprising at least one longitudinal notch (8), preferably in the form of a groove, extending from the head (2b) to the free end of the cylindrical body (2a), said notch (8) being arranged at the angular position that a section of the corresponding main protrusion (5) is arranged, so that in the position of use said notch (8) faces the complementary secondary protrusion (6) of the other mounting bushing (1).

15. Rack assembly comprising a steering gear (200) and a set of bushings (100) according to any of the preceding claims, wherein the enveloping bushing (4) forms part of the steering gear (200).
